(19) Europäisches Patentamt
European Patent Office
Office européen des brevets

(11) **EP 1 187 097 B1**

(12) **EUROPEAN PATENT SPECIFICATION**

(45) Date of publication and mention
of the grant of the patent:
**06.06.2007 Bulletin 2007/23**

(51) Int Cl.:
***G10L 15/06*** (2006.01)

(21) Application number: **01000337.4**

(22) Date of filing: **02.08.2001**

(54) **Accumulating transformations for hierarchical linear regression HMM adaptation**

Speicherung von Transformationen für die Anpassung von Markov Modellen (HMM) mittels hierarchischer linearer Regression

Accumulation de transformations pour l'adaptation de modèles de Markov cachés (HMM) par régression linéaire hiérarchique

(84) Designated Contracting States:
**DE FR GB**

(30) Priority: **02.08.2000 US 222596 P**
**22.06.2001 US 887394**

(43) Date of publication of application:
**13.03.2002 Bulletin 2002/11**

(73) Proprietor: **Texas Instruments Incorporated**
**Dallas, Texas 75251 (US)**

(72) Inventor: **Gong, Yifan**
**Plano,**
**Texas 75025 (US)**

(74) Representative: **Holt, Michael et al**
**Texas Instruments Limited**
**European Patents Department**
**800 Pavilion Drive**
**Northampton, NN4 7YL (GB)**

(56) References cited:
**EP-A- 0 913 809** **EP-A- 1 008 983**

**Description**

Field of Invention

This invention relates generally to speech recognition and more particularly to adaptive speech recognition with hierarchical linear HMM adaptation.

Background of Invention

Hierarchical Linear Regression (HLR) (e.g. MLLR [See C. J. Leggetter and P.C. Woodland, Maximum likelihood linear regression for speaker adaptation of continuous density HMMs, Computer, Speech and Language, 9(2): 71-185,1995] is now a common technique to transform Hidden Markov Models (HMM) models for use in an acoustic environment different from the one the models are initial trained. The environments refer to speaker accent, speaker vocal tract, background noise, recording device, transmission channel, etc. HLR improves word error rate (WER) substantially by reducing the mismatch between training and testing environments [See C.J. Leggetter cited above].

Hierarchical Linear Regression (HLR) (e.g. MLLR or Maximum Likelihood Linear Regression) is an interactive process that transforms an initial Hidden Markov Model (HMM) models step-by-step into a target model. Typically, the iteration requires M alignments of transformed HMM against speech data and each alignment results are used to produce new transformations through N EM re-estimations. Thus M x N steps are required.

Current methods build the models at m-th step from models at m - 1-th step. Each step produces a set of transformations that is used by the step next to it. To reproduce the target models, the M x N transformations have to be stored and later applied to the initial models.

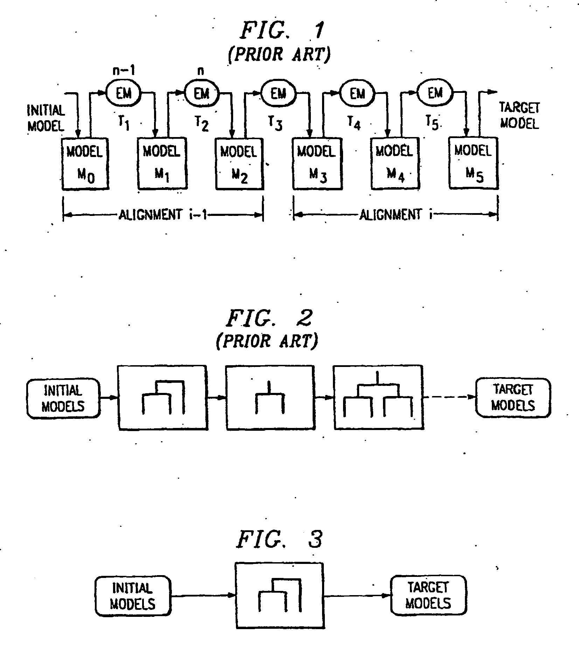

Current methods build the models at m-th step from models at m - 1-th step. Each step produces a set of transformations EM (Expectation Maximization) that is used by the step next to it, as illustrated in Figure 1. At the recognition time, to get the target models, two alternatives can be considered. The first is to store the model set obtained at the M x N transformations. As typical continuous speech recognizers may use tens of thousands of mean vectors, storing the additional parameters of that size is unaffordable for situations as in speech recognition on mobile devices. The second is to apply successively the M x N transformations to the initial model set, as illustrated by Fig-2. This requires storing the M x N transformations. Typically the storage requirement is substantially lower. However, it is still prohibitive for typical embedded systems such as a DSP based one. Notice that, as represented by the size of the boxes in Figure 2, the number of transformations in each transformation step may be different.

Summary of Invention

A new method, which builds the models at m-th step directly from models at the initial step, is provided to minimize the storage and calculation. The method therefore merges the M x N transformations into a single transformation. The merge guarantees the exactness of the transformations and make it possible for recognizers on mobile devices to have adaptation capability. The goal of the method to be described is to provide a single set of transformations which combines all M x N set of transformations, so that a target model at any iteration can be calculated directly from initial model and the single set of transformations. Figure 3 illustrates the goal.

The combination guarantees the exactness of the total transformations, i.e. the resulting models obtained by the single set of transformations are the same as the target models obtained by successive applications of transformations. This results make it possible for recognizers on mobile devices to have adaptation capability.

Description of Drawings:

The present invention will now be further described by way of example, with reference to the preferred and exemplary embodiments illustrated in the figures of the accompanying drawings in which:

Figure 1 illustrates types of iterations;
Figure 2 illustrates Target models are obtained by successive application of several set of transformations $T_1$, $T_2$.
Figure 3 illustrates Target models are obtained by a single application of one set of transformations T.
Figure 4 illustrates part of a regression tree.
Figure 5 illustrates operation according to an embodiment of the present invention.
Figure 6 illustrates a system according to an embodiment of the present invention.

Description of Preferred Embodiment

In accordance with the present invention as claimed in claim 1, the method builds the models at the m-th step directly from models at the initial step by successive applications of transformations as illustrated in Figures 3 and 5. The algorithms for providing this are derived herein in the following.

Let $\Xi = \{\xi_1, \xi_2, ..., \xi_N\}$ be the set of nodes of the regression tree. Leaf nodes $\Omega \subset \Xi$ of the tree correspond to a class. A class can be either a HMM, a cluster of distributions, a state PDF, etc., depending on the adaptation scheme. A leaf node $\alpha \in \Omega$ is assigned the number m($\alpha$ i) of acoustic vectors associated to the node at iteration .i.

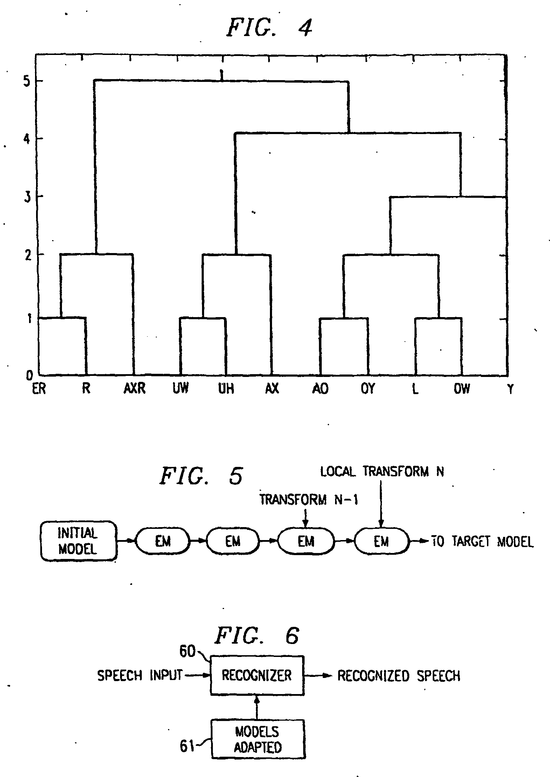

For illustration, Figure 4 shows part of a tree with leaves corresponding to phone HMM.

We introduce the function

$$\phi : \Xi \mapsto \Xi$$

such that $\xi_j = \phi(\xi_i) i \neq j$ is the root of the node $\xi_i$. Similarly, we introduce the function

$$\varphi : \Xi \times [0,1] \mapsto \Xi$$

such that $\xi = \phi(\varphi(\xi,i))$, i.e. $\ell(\xi,i)$ is the i-th descendent of the node $\xi$.

At each iteration of parameter estimation, to each node is associated a number $\rho(\xi,i)$ recording the total number of input vectors under the node.

$$\rho(\xi, i) = \begin{cases} m(\xi, i) & if \ \xi \in \Omega \\ \sum_i \rho(\xi, i) & otherwise \end{cases}$$

A node is called reliable if

$$\rho(\xi,i) > P$$

where P is a constant, fixed for each alignment. The function

$$\psi : \Xi \times N \mapsto [False, True]$$

such that $\psi(\xi,i)$ indicates if a node is reliable at the i-th iteration. Note that at each iteration, as the alignment between leaf nodes and speech signals may change, $\psi$ is a function of i. Only reliable nodes are assigned a transformation $T_\xi^i$.

Each leaf node, e.g. each HMM, has its transformation located on the first reliable node given by recursively tracing back to the roots.

Another function we introduce is

$$\chi : \Xi \times N \mapsto \Xi$$

such that $\zeta = \chi(\xi,i)$ is the first root node of $\xi$ that satisfies $\psi(\zeta,i) =$ True.

We use general form for linear regression transformation, which applies a linear transformation T to the mean vector of Gaussian distributions:

$$\hat{\mu} = T(\mu) = A\mu + B$$

where A is a D x D matrix, and : a D-dimensional column vector, and B a D-dimensional column vector. We assume that at any step, the current model is always obtained by transforming the initial model. I.e. We always map the original models:

$$\forall n \forall \xi, \hat{\mu}_n = T_{n,\xi}(\mu_0) = A_{n,\xi}\mu_0 + B_{n,\xi}$$

Referring to Figure. 1, we distinguish two types of parameter estimation iterations: between EM and between alignment iterations. Correspondingly, in the next two sections we will study two types of transformation combinations:

- Transformation accumulation between EM estimations.

- Transformation accumulation between alignment iterations.

Transformation accumulation between EM estimations

Given

- The set of transformations that maps the initial models through n - 1 EM re-estimations (global at n - 1).

- The set of transformations that maps the models at n - 1-th iteration to the models at the iteration n (local at n).

We want to find the set of accumulated transformations, global at n, which combines the global at n - 1 and local at n (local at n).
As between two EM the alignment is fixed, the reliable node information is unchanged. Therefore the association between nodes and transformations is fixed from at the two EM iterations.
At any given alignment, for each $\xi \in \Xi$ and $\psi(\xi, i)$, let $A_{n-1,\xi}$ and $B_{n-1,\xi}$ be the global transformation derived at EM iteration n - 1, and $A_{n,\xi}$ and $B_{n,\xi}$ be the local transformation derived at EM iteration n. Then a single transformation $\hat{A}_{n,\xi}$ and $\hat{B}_{n,\xi}$ is combined from the two transformations.

Proposition 1 $\forall \xi \in \Xi^{\wedge}\psi(\xi, i)$ where ^ is global,

$$(\hat{A}_{n-1,\xi}, \hat{B}_{n-1,\xi}) \oplus (\hat{A}_{n,\xi}, \hat{B}_{n,\xi}) \underline{\underline{\Delta}} (\hat{A}_{n,\xi}, \hat{B}_{n,\xi})$$

With

$$\begin{cases} \hat{A}_{n,\xi} = A_{n1\xi}\hat{A}_{n-1,\xi} & \hat{A}_{0,\xi} = I \\ \hat{B}_{n,\xi} = A_{n1\xi}\hat{B}_{n-1,\xi} + B_{n1\xi} & \hat{B}_{0,\xi} = 0 \end{cases}$$

PROOF:

The case n = 1 corresponds to a single transformation and correctness of Eq-5 is obvious. For n > 1, using Eq-3:

$$\mu_n = A_{n,\xi}\mu_{n-1,\xi} + B_{n,\xi}$$

$$= A_{n,\xi}(\hat{A}_{n-1,\xi}\mu_0 + \hat{B}_{n-1,\xi}) + B_{n,\xi}$$

$$= (A_{n,\xi}\hat{A}_{n-1,\xi})\mu_0 + (A_{n,\xi}\hat{B}_{n-1,\xi} + B_{n,\xi})$$

$$= \hat{A}_{n,\xi}\mu_0 + B_{n,\xi}$$

Transformation accumulation between alignment iterations

Given

- The set of transformations that maps the initial models through i - 1 alignments (global at i - 1).

- The set of transformations that maps the models at i - 1-th alignment to the models at the alignment i (local at i).

We want to find the set of accumulated transformations, global at i, which combines the global at i - 1 and locate at i transformations.

Different from the accumulation between two EM iterations, the alignment here may be changed, which results in a change in the reliable node information. Therefore the association between nodes and transformations cannot be assumed fixed from i - 1 to i-th alignment. For instance, the number of transformations at i is different from that at i - 1, for two reasons:

- The value of P in Eq-2 may be different. Typically, P is decreased to increase the number of transformations as i increases.

- Even if P is kept constant a cross alignment, as the acoustic model parameters are changed at each alignment, $\rho(\xi,i)$ may change as function of i, so will $\psi(\xi,i)$.

The combined set of transformations is specified by Eq-10.

Proposition 2 $\forall \xi \in \Xi$ :

$$T_\xi^i = \begin{cases} T_\xi^{i-1} \oplus T_\xi^i & \textit{if} \quad \psi(\xi,i-1) \wedge \psi(\xi,i) \\ T_\xi^{i-1} \oplus T_{\chi(\xi,i)}^i & \textit{if} \quad \psi(\xi,i-1) \wedge \neg\psi(\xi,i) \\ T_{\chi(\xi,i-1)}^{i-1} \oplus T_\xi^i & \textit{if} \quad \neg\psi(\xi,i-1) \wedge \psi(\xi,i) \\ \textit{None} & \textit{Otherwise} \end{cases}$$

PROOF:

$\forall \xi \in \Xi$, only one of four situations can happen:

1. It is a reliable node at both iterations i - 1 and i. The parameters of the models under this node are therefore transformed by $\mathrm{T}_{\xi}^{i-1}$ and then by $\mathrm{T}_{\xi}^{i}$ .

2. It is a reliable node at iteration i - 1 but not at iteration i. The transformation at i is therefore the one at the node $\chi(\xi,i)$. The parameters of the models under node $\xi$ are therefore transformed by $\mathrm{T}_{\xi}^{i-1}$ and then by $\mathrm{T}_{x\xi}^{i}(\xi,i)$ .

3. It is a reliable node at iteration i but not at iteration i - 1. The transformation at i - 1 is therefore the one at the node $\chi(\xi,i$-1). The parameters of the models under node $\xi$ are therefore transformed by $\mathrm{T}_{x}^{i-1}(\xi,i-1)$ and then by $\mathrm{T}_{\xi}^{i-1}$ .

4. It is not a reliable node at both iterations. The node has therefore no transformation.

In the fourth case, no transformation will be generated.

Referring to Figure 6, there is illustrated a system according to one embodiment of the present invention wherein the input speech is compared to models at recognizer 60 wherein the models 61 are HMM models that have had HLR HMM adaptation or training using only a single set of transformation parameters wherein for transformation accumulations between EM estimations equation 4 is used and for transformation accumulation between alignment iterations is according to equation 10.

## Claims

**1.** A method of hierarchical linear regression to develop a set of linear transforms for adaptation of an initial set of Hidden Markov Models to a new environment, comprising the steps of:

  providing an initial set of Hidden Markov Models,
  obtaining adaptation speech data from a new environment,

  **characterized by**
  adapting the initial set of Hidden Markov Models to the new acoustic environment by a procedure comprising the steps of creating an alignment of the adaptation speech data to the HMM model set, then performing the iterative steps of Estimate-Maximize (EM) estimation to generate a local set of linear transforms, merging the local set of linear transforms with a set of prior global transforms to form a new global set of transforms, adapting the initial set of HMM models using the new global set of transforms, and beginning a new EM estimation iteration step to repeat the procedure.

## Patentansprüche

**1.** Verfahren einer hierarchischen linearen Regression, um eine Menge linearer Transformationen für die Anpassung einer Anfangsmenge von Hidden-Markov-Modellen an eine neue Umgebung zu entwickeln, das die folgenden Schritte umfasst:

  Bereitstellen einer Anfangsmenge von Hidden-Markov-Modellen,
  Erhalten von Anpassungssprachdaten von einer neuen Umgebung,

  **gekennzeichnet durch**
  Anpassen der Anfangsmenge von Hidden-Markov-Modellen an die neue akustische Umgebung **durch** eine Prozedur, die die folgenden Schritte umfasst: Erzeugen einer Ausrichtung der Anpassungssprachdaten auf die HMM-Modellmenge, dann Ausführen der iterativen Schritte einer Estimate-Maximize-Schätzung (EM-Schätzung), um eine lokale Menge linearer Transformationen zu erzeugen, Mischen der lokalen Menge linearer Transformationen mit einer Menge früherer globaler Transformationen, um eine neue globale Menge von Transformationen zu bilden, Anpassen der Anfangsmenge von HMM-Modellen unter Verwendung der neuen globalen Menge von Transformationen und Beginnen eines neuen EM-Schätzungs-Iterationsschrittes, um die Prozedur zu wiederholen.

**Revendications**

1. Procédé de régression linéaire hiérarchique pour développer un jeu de transformations linéaires pour l'adaptation d'un jeu initial de modèles de Markov cachés vers un nouvel environnement, comprenant les étapes consistant à :

   fournir un jeu initial de modèles de Markov cachés,
   obtenir des données vocales d'adaptation à partir d'un nouvel environnement,

   **caractérisé par**
   l'adaptation du jeu initial de modèles de Markov cachés au nouvel environnement acoustique par une procédure comprenant les étapes consistant à créer un alignement des données vocales d'adaptation sur le jeu de modèles HMM, puis à effectuer les étapes itératives de l'estimation Maximisation de l'Espérance (EM) pour générer un jeu local de transformations linéaires, fusionner le jeu local de transformations linéaires avec un jeu de transformations globales antérieur pour former un nouveau jeu global de transformations, adapter le jeu initial de modèles HMM à l'aide du nouveau jeu global de transformations, et commencer une nouvelle étape d'itération d'estimation EM pour répéter la procédure.

## FIG. 1
### (PRIOR ART)

## FIG. 2
### (PRIOR ART)

## FIG. 3

## FIG. 4

## FIG. 5

## FIG. 6